(19)

**Europäisches Patentamt**
**European Patent Office**
**Office européen des brevets**

(11) **EP 2 949 907 A1**

(12) **EUROPEAN PATENT APPLICATION**

(43) Date of publication:
**02.12.2015 Bulletin 2015/49**

(51) Int Cl.:
*F02D 41/10* (2006.01)        *F02D 41/14* (2006.01)
*F02D 41/30* (2006.01)

(21) Application number: **15169068.2**

(22) Date of filing: **25.05.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **30.05.2014   SE 1450656**

(71) Applicant: **Scania CV AB**
**151 87 Södertälje (SE)**

(72) Inventors:
• **Evaldsson, Martin**
  **131 31 Nacka (SE)**
• **Redbrant, Karl**
  **171 63 Solna (SE)**

(74) Representative: **Scania CV AB**
**Patents, GP 117kv**
**151 87 Södertälje (SE)**

(54) **ADJUSTMENT OF A TORQUE REQUESTED FORM AN ENGINE**

(57)    The present invention relates to a method and a system for the control of a torque $Tq_{demand}$ requested from the engine, wherein the engine provides a dynamic torque $Tq_{fw}$ in response to a torque $Tq_{demand}$ requested from the engine. According the present invention, the requested torque $Tq_{demand}$ is controlled at least based on a current value $Tq_{fw\_pres}$ for the dynamic torque, a moment of inertia $J$ for the powertrain, a desired derivative $\dot{Tq}_{fw\_req}$ of the dynamic torque related to a spring constant k for the powertrain; $\frac{\dot{Tq}_{fw\_req}}{k}$; a current rotational difference $\Delta\omega_{pres}$ between a first rotational speed $\omega_1$ for a first end of the powertrain and a second rotational speed $\omega_2$ for a second end of the powertrain, and a calibration parameter $\tau_{cal}$ related to a transient for the dynamic torque in the direction of the desired derivative $\dot{Tq}_{fw\_req}$, wherein the current rotational speed difference $\Delta\omega_{pres}$ is minimised.

[201]
Determine $Tq_{fw\_pres}$

[202]
Determine $J$

[203]
Determine the derivative of $Tq_{fw\_req}$ and divide by $k$

[204]
Determine $\Delta\omega_{pres}$

[205]
Determine $\tau_{cal}$

[206]
Control at least based on:
- $Tq_{fw\_pres}$
- $J$
- the derivative for $Tq_{fw\_req}$ divided by $k$
- $\Delta\omega_{pres}$
- $\tau_{cal}$

Fig. 2

EP 2 949 907 A1

**Description**

**Technical field**

The present invention relates to a system arranged for the control of a torque $Tq_{demand}$ requested from an engine according to the preamble to claim 1. The present invention also relates to a method for the control of a torque $Tq_{demand}$ requested from an engine according to the preamble to patent claim 14, and a computer program and a computer program product, which implement the method according to the invention.

**Background**

The following background description constitutes a description of the background to the present invention, which does not, however, necessarily constitute prior art.

Vehicles, such as for example cars, buses and trucks are driven forward by an engine torque produced by an engine in the vehicle. This engine torque is provided to the vehicle through a powertrain in the vehicle. The powertrain contains a range of inertias, torsional compliances and dampening components, meaning that the powertrain, to a varying degree, may have an impact on the engine torque being transferred to the driving wheels. Thus, the powertrain has a torsional compliance/flexibility and a play which means that oscillations in torque and/or rotational speeds, so called powertrain oscillations, may occur in the vehicle when the vehicle, for example, sets off once a torque has been requested from the engine. These oscillations in torque and/or rotational speeds occur when forces, having been built up in the powertrain in the period between the engine providing the speed and the vehicle moving off, are released as the vehicle moves off. Powertrain oscillations may make the vehicle rock longitudinally, which is described in further detail below. These rocking movements in the vehicle are very disruptive for the driver of the vehicle.

Therefore, in some prior art solutions for avoiding these powertrain oscillations, preventive strategies have been used at the request of the engine torque. Such strategies may utilise limited torque ramps when the engine torque is requested, whereat these torque ramps have been adapted so that the requested engine torque is limited in such a way, that the powertrain oscillations are reduced, or do not occur at all.

**Brief description of the invention**

The torque ramps which are used today when an engine torque is requested, thus introduce a limit to how the torque may be requested by the engine in the vehicle. This limitation is necessary under the solutions of prior art, in order to reduce the disruptive powertrain oscillations. Allowing the driver and/or, for example, a cruise control to freely request a torque would, with current art systems, often give rise to considerable and disruptive powertrain oscillations, which is why limiting torque ramps are used.

The limiting torque ramps in current art are normally static. Static torque ramps, which are also termed static torques, have an advantage in that they are of a very limited complexity, which is one of the reasons why they are so often used. However, static torque ramps have a number of disadvantages, relating to the fact that they are not optimised to all driving modes that the vehicle may be exposed to. For certain driving modes, the static and limited torque ramps give rise to a reduction in vehicle performance, as, due to the torque ramp, the requested torque is unnecessarily low, for driving modes wherein it would have been possible to request more engine torque without the occurrence of powertrain oscillations. For other driving modes, the torque ramp does not limit the requested torque sufficiently, which means that powertrain oscillations occur and therefore rocking movements in the vehicle. Therefore, the use of torque ramps, for certain driving events, provides non-optimal torques, which may give rise to an unnecessary reduction in vehicle performance and/or rocking that reduces comfort, caused by powertrain oscillations.

It is therefore one objective of the present invention to provide a method and a system for control of a requested torque $Tq_{demand}$, which at least partly solves these problems.

This objective is achieved through the above mentioned system in accordance with the characteristics set out in claim 1. The objective is also achieved through the above mentioned method according to the characterising portion of claim 14, and the above mentioned computer program and computer program product.

The present invention relates to the control of a torque $Tq_{demand}$ requested from the engine, whereat the engine provides a dynamic torque $Tq_{fw}$ in response to a torque $Tq_{demand}$ requested from the engine. The dynamic torque $Tq_{fw}$ is the torque at the flywheel, which connects the engine to its output shaft and which, through a gear ratio $i$ is related to a dynamic wheel torque $Tq_{wheel}$ for the powertrain, and which is supplied to the driving wheels of the vehicle. The gear ratio $i$ here constitutes the total gear ratio of the powertrain, comprising for example the gearbox ratio for a specific gear. According to the present invention, the requested torque $Tq_{demand}$ is controlled, at least based on a current value $Tq_{fw\_pres}$ for the dynamic torque, a moment of inertia $J$ for the powertrain, a desired derivative $\dot{Tq}_{fw\_req}$ of the dynamic torque in relation to a spring constant $k$ for the powertrain; $\frac{\dot{T}q_{fw\_req}}{k}$; a current rotational speed difference $\Delta\omega_{pres}$ between a first rotational speed $\omega_1$ for a first end of the powertrain and a second rotational speed $\omega_2$ for a second end of the powertrain, as well as a calibration parameter $\tau_{cal}$, related to a transient for the dynamic torque in the direction of the desired derivative $\dot{T}q_{fw\_req}$.

Control of the requested torque $Tq_{demand}$ according to the present invention controls the first rotational speed $\omega_1$, at least in part continuously, in the direction of the second engine speed $\omega_2$, whereby the current rotational speed difference $\Delta\omega_{pres}$ is minimised.

Controlling the first rotational speed $\omega_1$ according to the present invention in the direction of the second engine speed $\omega_2$, and thereby reducing the difference $\Delta\omega_{pres}$ between these rotational speeds, has the advantage that the change in the dynamic torque $Tq_{fw}$ in this case may be controlled with great precision.

According to the present invention, the profile of the requested torque $Tq_{demand}$ is formed in such a manner that the dynamic torque $Tq_{fw}$ has an, at least in part, substantially even and non-oscillating profile, or does at least provide oscillations with significantly lower amplitudes than prior art. The present invention results in oscillations that do not have a negative impact on the comfort in the vehicle.

According to several embodiments of the present invention, the total delay time $t_{delay\_total}$ is also considered when performing the control. This makes the control more exact and reliable, as the regulator according to the invention is aware that it will take a period equal to the delay time $t_{delay\_total}$ before a measure impacts the control. The regulator may then execute each measure exactly at the point in time when it is needed, in order to optimally control the requested torque $Tq_{demand}$. In other words, the awareness of the delay time is used, in order to more exactly and at the right time be able to make adjustments of the requested torque $Tq_{demand}$.

In this way, powertrain oscillations may be reduced in number and/or size for a number of driving modes, wherein previous control of the requested torque $Tq_{demand}$ would have resulted in problematic rocking of the vehicle. These driving modes comprise a commencement of a request for a torque from the engine, a so-called "TIPIN" and a ceasing of a request for a torque from the engine, a so-called "TIPOUT". The present invention also reduces powertrain oscillations for driving modes comprising a play in the powertrain - in other words when, for example, the cogs of two cogwheels in the gearbox for a brief period of time do not engage, in order to later engage again -, which may, for example, occur in the transition between dragging the engine and acceleration/request of torque, when engaging the clutch, or during the above mentioned shift operation. Therefore, for all these driving modes the present invention may prevent rocking of the vehicle caused by powertrain oscillations, whereby the driver's comfort is increased.

Powertrain oscillations caused by external impact, for example caused by a bump in the road, may also quickly be reduced and/or dampened with the present invention.

Furthermore, the use of the present invention also provides a significant reduction in the wear of the powertrain of the vehicle. The reduction in the wear, achieved by the invention, provides an extended life for the powertrain, which of course is advantageous.

The control according to the present invention may occur in the direction of the desired dynamic torque $Tq_{demand}$. The desired dynamic torque $Tq_{demand}$ may be related to a driving mode used in the vehicle. Several such driving modes are defined for vehicles, for example an economic driving mode (ECO), a powerful driving mode (POWER) and a normal driving mode (NORMAL). The driving modes define, for example, how aggressively the vehicle will behave and what feeling the vehicle will convey when being driven, wherein this aggression is related to the derivative $\dot{T}q_{fw-req}$ for the dynamic torque.

The desired dynamic torque $Tq_{demand}$ may be related to and provide a ramping down or a ramping up prior to a shift operation in the gearbox 103, or a ramping up or a ramping down after a shift operation in the gearbox.

The desired dynamic torque $Tq_{demand}$ may be related to and provide a ramping down before the release of a clutch 106 or a ramping up after the engaging of the clutch 106.

The desired dynamic torque $Tq_{demand}$ may be related to a calibration of at least one parameter, which is related to a risk for further jerkiness of the powertrain. For example, the desired torque $Tq_{demand}$ may be calibrated to a value compensating for jerks in the powertrain when relatively large changes in the requested torque occur, for example when an accelerator pedal is depressed or released relatively quickly.

## Brief list of figures

The invention will be illustrated in more detail below, along with the enclosed drawings, where similar references are used for similar parts, and where:

Fig. 1 shows an example vehicle,

Figure 2 shows a flow chart for a method according to one embodiment of the present the invention,

Figure 3 shows a control device, in which a method according to the present invention may be implemented,

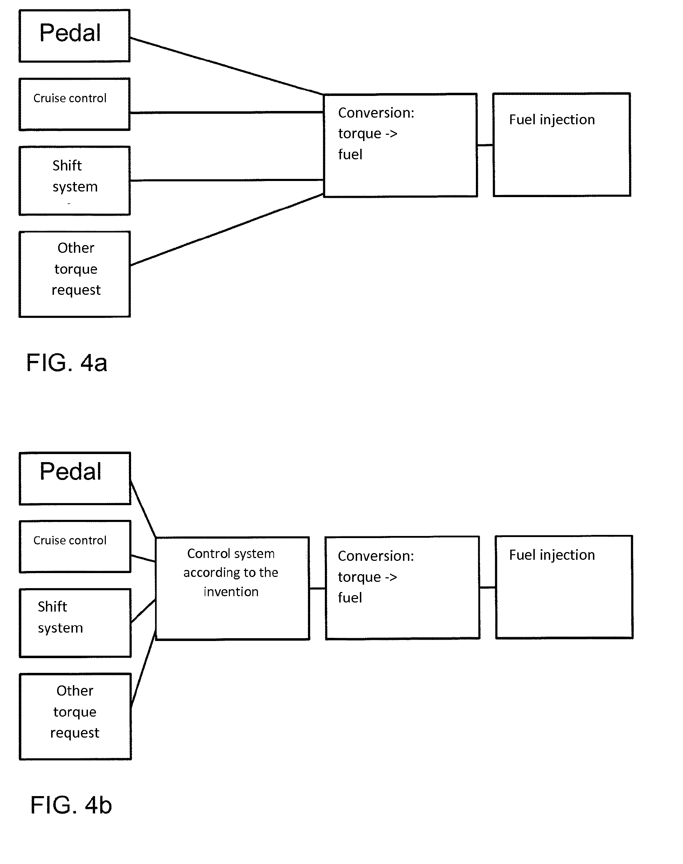

Figures 4a-b schematically show a block diagram for a prior art fuel injection system, and a fuel injection system comprising a control system according to the present invention;

Figures 5a-b show a driving mode comprising a shift operation when a prior art control is applied, and when a control according to the invention is applied, respectively,

The Figures 6a-c schematically illustrate a play in the powertrain.

**Description of preferred embodiments**

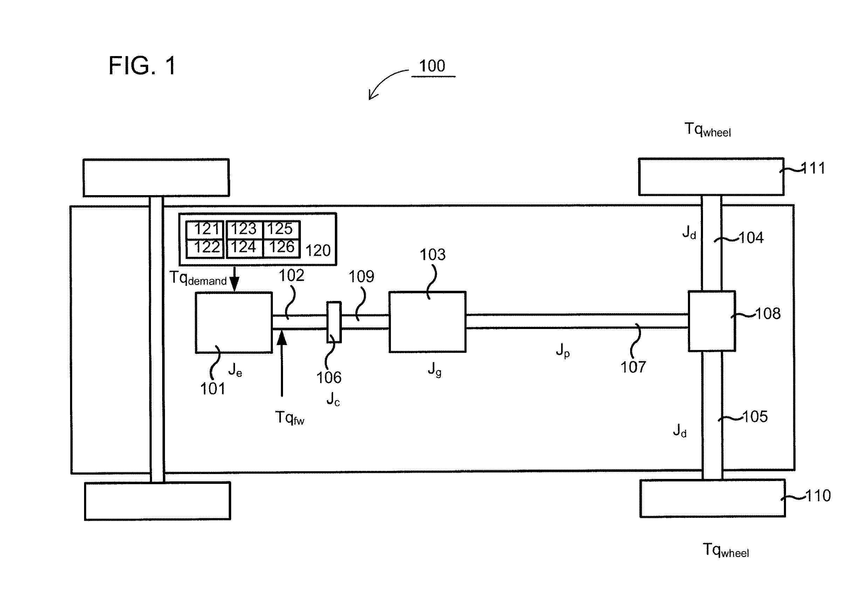

Figure 1 schematically shows a heavy example vehicle 100, such as a truck, a bus or similar, which will be used to explain the present invention. The present invention is, however, not limited to use in heavy goods vehicles, but may also be used in lighter vehicles such as cars. The vehicle 100 shown schematically in Figure 1 comprises a pair of driving wheels 110, 111. The vehicle furthermore comprises a powertrain with an engine 101, which may be for example a combustion engine, an electrical motor or a combination of these, a so called hybrid. The engine 101 may, for example, in a customary fashion, via an output shaft 102 on the engine 101, be connected with a gearbox 103, possibly via a clutch 106 and an input shaft 109 connected to the gearbox 103. An output shaft 107 from the gearbox 103, also known as a propeller shaft, drives the driving wheels 110, 111 via a final gear 108, such as e.g. a customary differential, and drive shafts 104, 105 connected with said final gear 108. A control device 120 is schematically illustrated as providing control signals to the engine 101. As described below, the control device may comprise a first 121, a second 122 and a third 123, a fourth 124 and a fifth 125 determining device and an execution device 124. These devices are described in more detail below.

When a driver of the motor vehicle 100 increases a torque request to the engine 101, for example by inputting via an input means, such as the depressing of an accelerator pedal, this may result in a relatively rapid change of the powertrain's torque. This torque is resisted by the driving wheels 110, 111, due to their friction against the ground and the rolling resistance of the motor vehicle. The drive shafts 104, 105 are hereby exposed to a relatively powerful torque.

For reasons of cost and weight, among others, the drive shafts 104, 105 are not normally dimensioned to handle this severe stress without being impacted. In other words, the drive shafts 104, 105 have a relatively great torsional compliance. The propeller shaft 107 may also have a relatively great torsional compliance. The other components of the drive shaft may also have some form of torsional compliance. Due to the relative torsional compliance of the drive shafts 104, 105, they act as torsion springs between the drive shafts 110, 111 and the final gear 108. In the same way, the other torsional compliances in the powertrain also act as torsion springs between the location of the various components and the driving wheels 110, 111. Once the rolling resistance of the vehicle no longer manages to hold back the torque from the powertrain, the motor vehicle 100 will start to roll, whereby the force in the drive shafts 104, 105 acting as a torsion spring will be released. When the motor vehicle 100 starts to set off, this released force may cause powertrain oscillations, meaning that the motor vehicle starts to rock in a longitudinal direction, i.e. in the driving direction. The driver of the motor vehicle experiences this rocking as very uncomfortable. A driver desires a soft and comfortable driving experience and when such a comfortable driving experience is achieved, this give a sense of the motor vehicle being a refined and well developed product. Therefore, uncomfortable powertrain oscillations should if possible be avoided.

The present invention relates to the control of a torque $Tq_{demand}$, requested from the engine 101. The engine 101 provides a dynamic torque $Tq_{fw}$ in response to a torque $Tq_{demand}$ requested from the engine, where this dynamic torque $Tq_{fw}$ constitutes a torque at the flywheel connecting the engine 101 to its output shaft 102. This dynamic torque is the torque $Tq_{fw}$, which through a gear ratio $i$ for the powertrain, relates to a dynamic wheel torque $Tq_{wheel}$ supplied to the driving wheels 110, 111 of the vehicle. The gear ratio $i$ here constitutes the total gear ratio of the powertrain, comprising the gearbox ratio for a current gear. In other words, a requested engine torque $Tq_{demand}$ results in a dynamic wheel torque $Tq_{wheel}$ at the vehicle's driving wheels 110, 111.

According to the present invention, the control of a torque $Tq_{demand}$ requested from the engine 101 is executed when the engine 101 provides a dynamic torque $Tq_{fw}$ to its output shaft 102 in response to the requested torque $Tq_{demand}$. The dynamic torque $Tq_{fw}$ is, through a gear ratio $i$, related to a dynamic wheel torque $Tq_{wheel}$, which is supplied to at least one driving wheel 110, 111 of the vehicle 100 by a powertrain comprising the engine 101.

According to the present invention, the requested torque $Tq_{demand}$ is controlled, at least according to a current value $Tq_{fw\_pres}$ for the dynamic torque, a moment of inertia $J$ for the powertrain, a desired derivative $\dot{Tq}_{fw\_req}$ of the dynamic torque related to a spring constant $k$ for the powertrain; $\frac{\dot{T}q_{fw\_req}}{k}$; a current rotational speed difference $\Delta\omega_{pres}$ between a first rotational speed $\omega_1$ for a first end of the powertrain and a second rotational speed $\omega_2$ for a second end of the powertrain and a calibration parameter $\tau_{cal}$, related to a transient for the dynamic torque in the direction of the desired derivative $\dot{T}q_{fw\_req}$.

Control of the requested torque $Tq_{demand}$ according to the present invention controls the first rotational speed $\omega_1$, at least in part, continuously in the direction of the second engine speed $\omega_2$, whereat the current rotational speed difference $\Delta\omega_{pres}$ is minimised.

Control may be performed by a system arranged for the control of a torque $Tq_{demand}$ requested from an engine 101. The system comprises an execution device 126, which is arranged to control the requested torque $Tq_{demand}$, at least based on the aforementioned current value $Tq_{fw\_pres}$ for the dynamic torque, the moment of inertia $J$ for the powertrain, the desired derivative $\dot{T}q_{f\_req}$ related to the spring constant $k$; $\frac{\dot{T}q_{fw\_req}}{k}$; the current rotational speed difference $\Delta\omega_{pres}$, and the calibration parameter $\tau_{cal}$.

According to one embodiment, the system also comprises a first 121, a second 122, a third 123, a fourth 124 and a fifth 125 determining device, which are arranged for the determining of the current value $Tq_{fw\_pres}$, the moment of inertia $J$, the desired derivative $\dot{T}q_{fw\text{-}req}$, the current rotational speed difference $\Delta\omega_{pres}$ and the calibration parameter $\tau_{cal}$, respectively.

A person skilled in the art will also realise that the above system may be modified according to the different embodiments of the method according to the invention.

In addition, the invention relates to a motor vehicle 100, e.g. a car, a truck or a bus, comprising at least a system for the control of the requested torque $Tq_{demand}$ according to the invention. Controlling the first rotational speed $\omega_1$ according to the present invention in the direction of the second rotational speed $\omega_2$, and thereby reducing the difference $\Delta\omega_{pres}$ between these rotational speeds has the advantage that it enables controlling the change in the dynamic torque $Tq_{fw}$ with a great degree of precision.

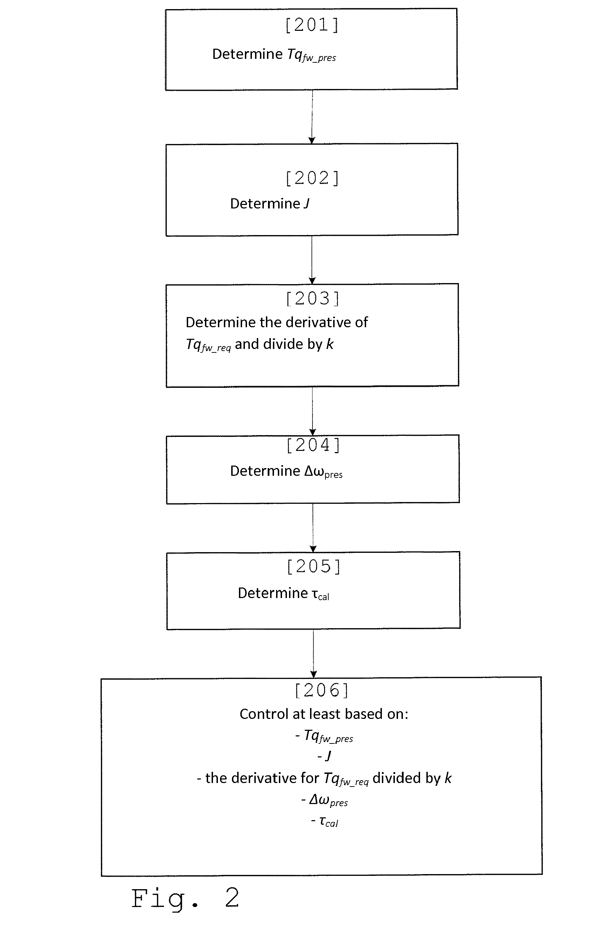

Figure 2 shows a flow chart for a method according to one embodiment of the present the invention.

In a first step 201 a current value $Tq_{fw\_pres}$ for the dynamic torque is determined, for example by means of a first determining device 121.

In a second step 202 a moment of inertia $J$ for said powertrain is determined, for example by means of a second determining device 122. This moment of inertia $J$ is described below and may be determined in advance, i.e. before the whole method according to the present invention is performed, wherein the second determining device 122 uses a previously determined value.

In a third step 203 a desired derivative $\dot{T}q_{fw\_req}$ for the dynamic torque is determined, for example by means of a third determining device 123, which is related to the below described spring constant $k$ for the powertrain; $\frac{\dot{T}q_{fw\_req}}{k}$.

In fourth step 204 a current rotational speed difference $\Delta\omega_{pres}$ between the first rotational speed $\omega_1$ and the second rotational speed $\omega_2$ is determined, for example by means of a fourth determining device 124. According to one embodiment, the speed difference $\Delta\omega_{pres}$ is comprised by the difference between the engine speed $\omega_e$ and the rotational speed $\omega_{wheel}$ for the driving wheels, as described below. In a fifth step 205, the calibration parameter $\tau_{cal}$ is determined. The calibration parameter $\tau_{cal}$ is related to the transient for the engine speed $\omega_e$ in the direction of the desired value, that is to say how quickly the engine speed $\omega_e$ will be settling in towards its desired value. In this manner, the calibration parameter $\tau_{cal}$ is also related to the transient for the dynamic torque towards the desired derivative $\dot{T}q_{fw\_req}$ for the torque.

In a sixth step 206 the requested torque $Tq_{demand}$ is controlled, for example by means of an execution device 126, at least based on the current value $Tq_{fw-Pres}$ for the dynamic torque, the moment of inertia $J$ for the powertrain, the desired derivative $\dot{T}q_{fw\_req}$. related to the spring constant $k$; $\frac{\dot{T}q_{fw\_req}}{k}$; the current rotational speed difference $\Delta\omega_{pres}$, and the calibration parameter $\tau_{cal}$.

A careful and exact control of the change in the dynamic torque $Tq_{fw}$ may be achieved in this way, by controlling the first rotational speed $\omega_1$ in the direction of the second rotational speed $\omega_2$.

In this way, by means of the present invention control of the requested torque $Tq_{demand}$ is achieved, which increases the vehicle's performance and/or driver comfort, by reducing the speed difference $\Delta\omega_{pres}$, which also reduces the rocking movements of the vehicle. Prior art has controlled the static torque, which has caused powertrain oscillations in the vehicle. By using the present invention, the dynamic torque $Tq_{fw}$ may instead be controlled, in order for a desired value $Tq_{w\_req}$ for the dynamic torque to be achieved, which means that powertrain oscillations may be reduced considerably. The reduction in powertrain oscillations increases the driver's comfort in the vehicle.

In other words, a physical torque, which is the result of fuel being injected into the engine and the response by the powertrain due to its characteristics, is here controlled, this being the dynamic torque $Tq_{fw}$. The dynamic torque $Tq_{fw}$ therefore corresponds to the torque that is provided by the gearbox 103, which also may be expressed as the torque that is provided by a flywheel in the powertrain, whereat the influence from the powertrain - such as the engine's acceleration and its effect -, is comprised within the dynamic torque $Tq_{fw}$. Thus, a physical control of the dynamic torque $Tq_{fw}$ is achieved when the present invention is used.

The dynamic torque $Tq_{fw}$ may for example be controlled in order to achieve specific torque ramps, such as ramping down or up after shift operations in the gearbox 103. The dynamic torque $Tq_{fw}$ may also be controlled in order to achieve desired specific torque values, which is useful for example for cruise control, that is to say the use of a cruise control device for the control of the speed of the vehicle, or for pedal driving, that is to say manual control of the vehicle speed, wherein the present invention may be used. This may be expressed as desired values $\dot{Tq}_{fw\_req}$ for the dynamic torque being possible to achieve through the control according to the present invention.

The dynamic torque $Tq_{fw}$, provided by the engine 101 to its output shaft 102, may in one embodiment be determined based on a delayed requested engine torque $Tq_{demand\_delay}$, the rotational inertia of the engine $J_e$ and the rotational acceleration $\dot{\omega}_e$ for the engine 101.

The delayed requested engine torque $Tq_{demand\_delay}$ has been delayed with the period of time $t_{inj}$ elapsing in order to execute an injection of fuel into the engine 101, i.e. the period of time it takes from the start of the injection until the fuel is ignited and combusted. This injection period is $t_{inj}$ typically known, but its length varies, for example for different engines and/or for different engine speeds of an engine. The dynamic torque $Tq_{fw}$ may here be determined as a difference between estimated values for a delayed requested engine torque $Tq_{demand\_delay}$ and the torque values $J_e\dot{\omega}_e$ comprising measured values for rotational acceleration $\dot{\omega}_e$ for the engine. In one embodiment, the dynamic torque $Tq_{fw}$ may therefore be represented by a signal difference between a signal for an estimated delayed requested engine torque $Tq_{demand\_delay}$ and the torque signal $J_e\dot{\omega}_e$ comprising measured values for rotational acceleration $\dot{\omega}_e$ for the engine.

The delayed requested engine torque $Tq_{ddemand\_delay}$ may in one embodiment be defined as a net torque, meaning that losses and/or frictions are compensated, whereby a requested net engine torque and a delayed requested engine torque are achieved.

The dynamic torque $Tq_{fw}$, as provided by the motor 101 to its output shaft 102, thus corresponds, according to one embodiment, to the delayed requested engine torque $Tq_{demand\_delay}$ less a torque corresponding to the engine's rotational inertia $J_e$, multiplied with a rotational acceleration $\dot{\omega}_e$ for the engine 101, i.e. $Tq_{fw} = Tq_{demand\_delay} - J_e\dot{\omega}_e$, the delayed requested engine torque $Tq_{demand\_delay}$ having been delayed by the injection time $t_{inj}$.

The rotational acceleration $\dot{\omega}_e$ for the engine 101 may here be measured by generating a time derivative of the engine speed $\omega_e$. The rotational acceleration $\dot{\omega}_e$ is then rescaled to a torque in accordance with Newton's second law, by being multiplied with the rotational moment of inertia $J_e$ for the engine 101; $J_e\dot{\omega}_e$.

According to another embodiment, the dynamic torque $Tq_{fw}$ provided by the engine 101 may also be determined by the use of a torque sensor being placed at a suitable arbitrary position along the vehicle's powertrain. Thus, a torque value measured by such a sensor may also be used in the feedback according to the present invention. Such a measured torque, which has been obtained by means of a torque sensor after the flywheel, i.e. somewhere between the flywheel and the driving wheels, corresponds to the physical torque that the dynamic engine torque $Tq_{fw}$ contributes. If a good a torque reporting may be achieved by means of the use of such a torque sensor, the torque sensor should therefore provide a torque signal corresponding to the dynamic torque $Tq_{fw}$.

As is illustrated in Figure 1, the different parts of the powertrain have different rotational inertias, comprising a rotational inertia $J_e$ for the engine 101, a rotational inertia $J_g$ for the gearbox 103, a rotational inertia $J_c$ for the clutch 106, a rotational inertia $Jp$ for the propeller shaft and rotational inertias $J_d$ for each drive shaft 104, 105. Generally speaking, all rotating bodies have a rotational inertia $J$, which depends on the mass of the body and the distance of the mass from the rotational centre. For reasons of clarity, in Figure 1, only the above mentioned rotational inertias have been added, and their significance for this present invention will be described hereafter. A person skilled in the art does, however, realise that more moments of inertia may occur in a powertrain than those listed here.

According to one embodiment of the present invention, the assumption is made that the rotational inertia $J_e$ of the engine 101 is much greater than other rotational inertias in the powertrain, and that the rotational inertia $J_e$ of the engine 101 therefore dominates a total rotational inertia $J$ of the powertrain. That is say $J = J_e + J_g + J_e + J_p + 2J_d$, but as $J_e \gg J_g$, $J_e \gg J_c$, $J_e \gg J_p$, $J_e \gg J_d$ the total rotational inertia $J$ of the powertrain is more or less equal to the rotational inertia $J_e$ of the engine 101; $J \approx J_e$ A non-limiting example of the values for these rotational inertias may be mentioned: $J_e = 4\text{kgm}^2$, $J_g = 0.2\text{kgm}^2$, $J_c = 0.1\text{kgm}^2$, $J_p = 7 * 10^{-4}\text{kgm}^2$, $J_d = 5 * 10^{-5}\text{kgm}^2$, which means that the assumption that the rotational inertia $J_e$ of the engine 101 dominates the total rotational inertia $J$ of the powertrain; $J \approx J_e$; is correct, as the other parts of the powertrain are much easier to rotate compared with the engine 101. The aforementioned example values are values on the engine side of the gearbox, which means that they will vary along the powertrain depending on the gear ratio used. Regardless which gear ratio is being used, the rotational inertia $J_e$ of the engine 101 is much greater than other rotational inertias, and therefore dominates the total rotational inertia $J$ of the powertrain.

As the rotational inertia $J_e$ of the engine dominates the total rotational inertia $J$ of the powertrain; $J \approx J_e$; the dynamic wheel torque $Tq_{wheel}$ corresponds to the dynamic torque $Tq_{fw}$ provided by the engine, multiplied with the gear ratio $i$, $Tq_{wheel} = Tq_{fw} * i$ for the powertrain. This considerably simplifies the control of the requested torque $Tq_{demand}$ according to the present invention, as it is therefore very easy to determine the dynamic torque $Tq_{wheel}$ at the wheels. Hereby, the control of the requested torque $Tq_{demand}$ according to the present invention may continuously be adapted to the dynamic torque $Tq_{wheel}$ provided to the wheels, which means that powertrain oscillations may be reduced significantly, or even be avoided completely. The engine torque $Tq_{demand}$ may then be requested in such a way that a desired dynamic torque $Tq_{wheel}$ is continuously provided to the wheels, which means that an even torque profile is achieved for the dynamic torque $Tq_{wheel}$ of the wheels, and that no oscillations occur for the wheels' torque profile, or that they have a considerably lower amplitude than in prior art control of the requested engine torque $Tq_{demand}$.

The powertrain may be approximated as a relatively weak spring which may be described as:

$$Tq_{fw} = Tq_{demand\_delay} - J_e\dot{\omega}_e = k(\theta_e - \theta_{wheel}) + c(\omega_e - \omega_{wheel}), \quad \text{(equation 1)}$$

where:

- $\theta_e$ is an angle for the engine's output shaft 102, i.e. a total increase of the engine's performance since a starting point. For example, the angle $\theta_e$ 1000 revs, which corresponds to 1000*2$\pi$ radians, if the engine has been running for a minute at the engine speed 1000 rpm;

- $\omega_e$ is the time derivative of $\theta_e$, i.e. a rotational speed for the shaft 102;

- $\theta_{wheel}$ is an angle for one or more of the driving wheels 110, 111, i.e. a total performance increase of the wheels since a starting point;

- $\omega_{wheel}$ is the time derivative of $\theta_{wheel}$, that is a rotational speed for the wheels;

- $k$ is a spring constant, which is related to a torque required for turning up the spring in order to achieve a certain gradient, for example in order to obtain a certain difference $\Delta\theta$ between $\theta_e$ and $\theta_{wheel}$. A low value for the spring constant $k$ corresponds to a weak and swaying spring/powertrain;

- $c$ is a dampening constant for the spring.

A derivation of equation 1 gives:

$$\dot{T}q_{fw} = k(\omega_e - \omega_{wheel}) + c(\dot{\omega}_e - \dot{\omega}_{wheel}) \quad \text{(equation 2)}$$

It is reasonable to assume that the powertrain often may be considered as an undampened spring, i.e. that $c = 0$, and that the spring constant $k$ is dominated by the spring constant $k_{drive}$ for the drive shafts 104, 105, i.e. $k = \frac{k_{drive}}{i^2}$ where $i$ is the gear ratio. If $c = 0$ then equation 2 is simplified as:

$$\dot{T}q_{fw} = k(\omega_e - \omega_{wheel}) \quad \text{(equation 3)}$$

As stated in equation 3, the derivative, that is the gradient, for the dynamic torque $Tq_{fw}$, may be considered to be proportional to the difference $\Delta\omega$ in the rotational speed $\omega_{wheel}$ for the wheels 110, 111 and $\omega_e$ for the engine/shaft 102.

This also means that a desired torque ramp $\dot{T}_{qfw\_req}$, that is a torque with a gradient and therefore changes in value over time, may be achieved by introducing a difference $\Delta\omega$ in the rotational speed $\omega_{wheel}$ of the wheels 110, 111 and the rotational speed $\omega_e$ of the engine/shaft 102; $\Delta\omega = \omega_e - \omega_{wheel}$:

$$\omega_{ref} = \omega_{wheel} + \frac{\dot{T}q_{fw\_req}}{k}; \quad \text{(equation 4)}$$

where $\omega_{ref}$ is the reference value to be requested from engine 101 in order to achieve the torque ramp.

The difference $\Delta\omega$ in the rotational speed has above been described as a difference between the rotational speeds $\omega_{wheel}$ of the wheels 110, 111 and the rotational speed $\omega_e$ of the engine/shaft. However, it must be realised that the difference $\Delta\omega$ in more general terms may be described as a difference in rotational speed between a first end of the powertrain, rotating with a first rotational speed and a second end of the powertrain, rotating at a second speed $\omega_2$; $\Delta\omega = \omega_1 - \omega_2$.

In the event that the difference $\Delta\omega$ in rotational speed constitutes a difference between the rotational speeds $\omega_{wheel}$ for the wheels 110, 111 and the rotational speed $\omega_e$ for the engine/shaft, determined according to one embodiment of the present invention, the torque $Tq_{demand}$ to be requested from the engine 101 is determined at least based on the sum of the current value $Tq_{fw\_pres}$ for the dynamic torque and a term comprising the moment of inertia $J$, multiplied with a ratio between a difference between a reference rotational speed $\omega_{ref}$ and the engine speed $\omega_e$ for the engine, divided with the calibration parameter $\tau_{cal}$:

$$Tq_{demand} = Tq_{fw\_pres} + J\left(\frac{\omega_{ref}-\omega_e}{\tau_{cal}}\right). \qquad \text{(equation 5)}$$

The reference rotational speed $\omega_{ref}$, which may be used for requesting an engine speed from the engine, may here be determined as a sum of the rotational speed $\omega_{wheel}$ for at least one driving wheel, and a ratio between the desired derivative $\dot{T}q_{fw\_req}$. and the spring constant $k$; $\omega_{ref} = \omega_{wheel} + \frac{\dot{T}q_{fw\_req}}{k}$, as described above for the equation 4.

By using the equation 5 when the requested torque $Tq_{demand}$ is being determined, the engine speed $\omega_e$ may be controlled in the direction of the rotational speed $\omega_{wheel}$ of the wheels 110, 111, so that the difference $\Delta\omega$ is minimised. This way, the control according to this embodiment is used in order to, at least in part, continuously control the engine speed $\omega_e$, in order to approach the rotational speed $\omega_{wheel}$ of the wheels 110, 111.

According to one embodiment of the present invention, the requested torque $Tq_{demand}$ is determined, when the difference $\Delta\omega$ in the rotational speed constitutes a difference between the rotational speeds $\omega_{wheel}$ of the wheels 110, 111 and the rotational speed $\omega_e$ of the engine/shaft, as a sum of the current value $Tq_{fw\_pres}$ for the dynamic torque, a total delay time $t_{delay\_total}$ multiplied with the desired derivative $\dot{T}_{qfw\_req}$, the moment of inertia $J$ for the powertrain multiplied with an acceleration $\dot{\omega}_{wheel}$ of the driving wheels 110, 111 geared with the gear ratio $i$, and a term comprising the moment of inertia $J$ multiplied by a ratio between the difference between the reference rotational speed $\omega_{ref}$ and the engine speed $\omega_e$, divided by the calibration parameter $\tau_{cal}$:

$$Tq_{demand} = Tq_{fw\_pres} + t_{delay\_total}\dot{T}q_{fw\_req} + J\dot{\omega}_{wheel} + J\left(\frac{\omega_{ref}-\omega_e}{\tau_{cal}}\right). \qquad \text{(equation 6)}$$

As mentioned above, the reference rotational speed $\omega_{ref}$ may be determined as a sum of the rotational speed $\omega_{wheel}$ of at least one driving wheel and a ratio between the desired derivative $Tq_{fw\_req}$ and the spring constant $k$; $\omega_{ref} = \omega_{wheel} + \frac{\dot{T}q_{fw\_req}}{k}$. The reference rotational speed $\omega_{ref}$ may be used in order to request a speed from the engine, so that the engine speed $\omega_e$ is controlled in the direction of the rotational speed $\omega_{wheel}$ of the wheels 110, 111, whereby the difference $\Delta\omega$ is minimised. The calibration parameter $\tau_{cal}$ is, as described above, related to a settling in period for the control/regulator and has the time dimension.

Here, the total delay time $t_{delay\_total}$ is considered in the control, which makes the control more exact and reliable, as the regulator according to the invention is aware that it will take a period equal to the delay time $t_{delay\_totay}$ before a measure impacts the control. The regulator may then execute each measure at exactly the point in time when it is needed, in order to optimally adjust the requested torque $Tq_{demand}$. In other words, the awareness of the delay time is used in order to more exactly and at the right time be able to make adjustments of the requested torque $Tq_{demand}$.

The desired derivative $\dot{T}q_{fw\_req}$ in the equation 6 may also be expressed as:

$$\dot{T}q_{fw\_req} = \frac{Tq_{fw\_req}-Tq_{fw\_pres}}{\tau} \qquad \text{(equation 7)}$$

The calibration parameter $\tau$ is related to a settling in period for the control/regulator and has the time dimension, and may differ from, or be the same as, the above mentioned calibration parameter $\tau_{cal}$. The calibration parameter $\tau$ may be set to a smaller value if a quicker settling is in desirable, and to a greater value if a slower settling in is desirable. $Tq_{fw\_req}$ is the desired value for the dynamic torque.

As described above, it may often be assumed that the rotational inertia $J_e$ of the engine 101 dominates the total rotational inertia $J$ of the powertrain, that is to say $J \approx J_e$, as other parts of the powertrain are very easy to rotate in relation to the engine 101, whereby $J$ may be replaced with $J_e$ in the equations 5 and 6.

The term $J\dot{\omega}_{wheel}$ in the equations 5 and 6 above is related to the acceleration $a_{vehicle}$ of the vehicle and the gear ratio $i$ of the powertrain and the wheel radius $r_{wheel}$ of the driving wheels 110, 111 according to:

$$J\dot{\omega}_{wheel} = J\frac{a_{vehicle}i}{r_{wheel}}. \qquad\qquad \text{(equation 8)}$$

In this way, the control using the equations 5 and 6 may be corrected for the vehicle's acceleration. The requested torque $Tq_{demand}$ will here be differentiated from the current value $Tq_{fw-Pres}$ for the dynamic torque.

According to one embodiment of the present invention, feedback is also used in the control. Here, the control of the requested torque $Tq_{demand}$ is also determined based on a feedback of a resulting actual value $\dot{T}q_{fw\_actual}$, corresponding to the desired derivative $Tq_{fw\_req}$. The requested torque $Tq_{demand}$ may then be determined according to:

$$Tq_{demand} = Tq_{fw} + t_{delay\_total}\dot{T}q_{fw\_req} + J\dot{\omega}_{wheel} + t_{delay_{total}}(\dot{T}q_{fw_{req}} - \dot{T}q_{fw\_actual})$$

$$\text{(equation 9)}$$

By using the equation 9 in the control, a very exact control may be executed, taking into consideration the result of the control, that is to say the resulting actual value $\dot{T}q_{fw\_actual}$ for the derivative of the dynamic torque.

The total delay time $t_{delay\_total}$, corresponding to the time elapsing from a determining of at least one parameter value until a change in the dynamic torque $Tq_{fw}$, based on the determined at least one parameter value, has been performed, may comprise one or more of a range of times. Considering the total delay time $t_{delay\_total}$, as it is implemented in this present invention, means that a more exact control may be performed, as the delay is considered and as the value for the dynamic torque $Tq_{fw}$ changes over time. Each measure may then be executed exactly at the point in time when it is needed, in order to optimally control the requested torque $Tq_{demand}$. In other words, the awareness of the delay time is used, in order to more exactly and at the right time be able to make adjustments of the requested torque $Tq_{demand}$, so that a comfortable and efficient control is achieved, which reduces the powertrain oscillations.

If the parameter value is measured, the total delay time $t_{delay\_total}$ may contain a measured time $t_{measure}$, elapsing in order to determine at least one parameter based on at least one measurement, which may comprise processing of measurements, such as averaging. The measure time $t_{measure}$ may also depend on where a sensor that is used is located.

If, instead, the parameter value is estimated, the total delay time $t_{delay\_total}$ may comprise an estimated time $t_{estimate}$, which elapses in order to determine at least one parameter value based on at least one estimate, for example comprising a time, which elapses in order to perform calculations comprised in the estimate.

The total delay time $t_{delay\_total}$ may also comprise a communication time $t_{com}$, which elapses in order to transfer signals that are used in the control between devices in the vehicle, such as delays imposed by a CAN bus (Controller Area Network bus) or similar in the vehicle.

The total delay time $t_{delay\_total}$ may also comprise a filter time $t_{filter}$, comprising filter delays for filterings performed during measurements and/or estimates of parameter values and/or for control according to the invention.

The total delay time $t_{delay\_total}$ may also comprise a calculation time $t_{comp}$, which elapses in order to perform calculations relating to the control according to the present invention.

The total delay time $t_{delay\_total}$ may also comprise a torque execution time $t_{torque\_response}$, which elapses from a torque request being made until an engine speed change corresponding to this torque request occurs. The above mentioned injection time $t_{inj}$ may here be included in the torque execution time $t_{torque\_response}$. The torque execution time $t_{torque\_response}$ may vary depending on the engine speed.

According to one embodiment of the present invention, the value $t_{delay\_total}$ corresponds to $(1.9 + 1.5)ti_{cyl}$ where

- $1.9ti_{cyl} = 1.5ti_{cyl} + ti_{pre\_calc}$;

- $1.5ti_{cyl} = t_{rpmfilter}$;

- $ti_{cyl}$ is the cylinder time, in other words the time between two corresponding events, for example the ignition or the injection, taking place in two subsequent cylinders. $ti_{cyl}$, depends on the engine speed, $ti_{cyl}$ = 120/(*engine speed* * *number of cylinders*), for example $ti_{cyl}$ = 20/*engine speed* for engines with 6 cylinders.;

- $ti_{pre\_calc}$ is the time before the injection itself, during which the torque for the next combustion is determined; and

- $t_{rpmfilter}$ is the delay time that the filtration of the speed signal provides. For a FIR filter (Finite Impulse Response filter), for example, this delay is 1.5$ti_{cyl}$.

In many applications, the spring constant $k$ is dominated by the spring constant $k_{drive}$ for the drive shafts 104, 105, related to the gear ratio for the powertrain, that is $k \approx \frac{k_{drive}}{i^2}$, where $i$ is the gear ratio.

In other applications, for which the spring constant $k$ is not dominated by the spring constant $k_{drive}$ for the drive shafts 104, 105, or for which the actual value of the spring constant $k$ is important and is not permitted to be approximated, a total spring constant $k_{tot}$ is determined for the powertrain, which comprises torsional compliances for substantially all components of the powertrain.

The spring constant $k$ may be determined based on knowledge of which components are included in the powertrain and the torsional compliances of the included components, and how the components of the powertrain are configured. As the configuration of the components and their relationship with the spring constant $k$ is known through measurements made during the construction and/or fitting of the powertrain, it is possible to determine the spring constant $k$.

The spring constant $k$ may also be determined by means of adaptive estimation when the vehicle is being driven. This estimation may then take place, at least partially continuously, during suitable driving sections. The estimate may be based on a difference $\Delta\omega$ in the rotational speed $\omega_{wheel}$ of the wheels 110, 111 and the rotational speed $\omega_e$ of the engine/shaft 102 during a torque ramp and on the gradient of the torque ramp, by determining the ratio between the derivative of the dynamic torque and the difference $\Delta\omega$; $k = \frac{\dot{Tq}_{fw}}{\Delta\omega}$. For example, the spring constant for the derivative 3000 Nm/s and the rotational speed difference 100 rpm is then $k = \frac{3000}{100} * \frac{\pi}{30} = 286$ Nm/row. The estimates may advantageously be carried out more than once, and thus an average value for the results is determined.

A person skilled in the art will realise that a method for the control of a requested torque $Tq_{demand}$ according to the present invention may also be implemented in a computer program, which when executed in a computer will cause the computer to carry out the method. The computer program usually consists of a part of a computer program product 303, where the computer program product comprises a suitable digital storage medium on which the computer program is stored. Said computer readable medium consists of a suitable memory, e.g.: ROM (Read-Only Memory), PROM (Programmable Read-Only Memory), EPROM (Erasable PROM), Flash, EEPROM (Electrically Erasable PROM), a hard disk device, etc.

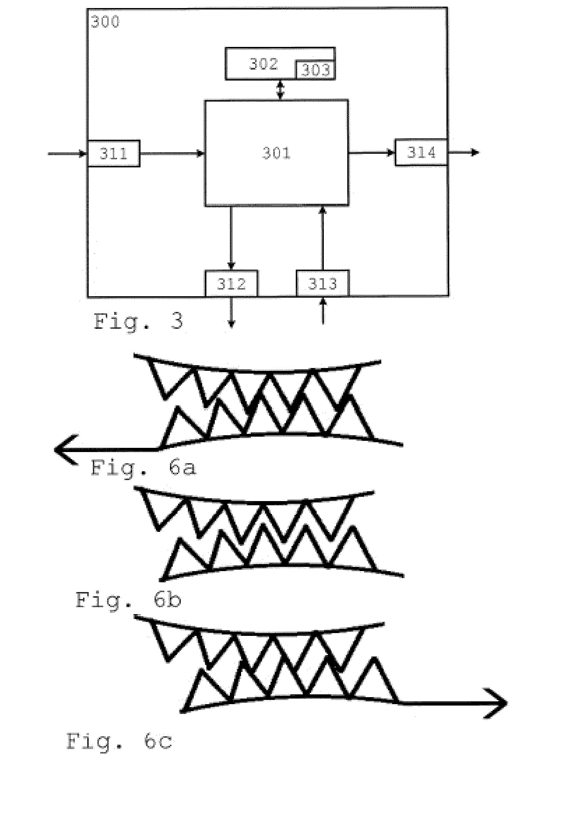

Figure 3 schematically shows a control device 300. The control device 300 comprises a calculation unit 301, which may consist of substantially a suitable type of processor or microcomputer, e.g. a circuit for digital signal processing (Digital Signal Processor, DSP), or a circuit with a predetermined specific function (Application Specific Integrated Circuit, ASIC). The calculation unit 301 is connected to a memory unit 302, arranged in the control device 300, providing the calculation device 301 with e.g. the stored program code and/or the stored data, which the calculation device 301 needs in order to be able to carry out calculations. The calculation unit 301 is also arranged to store interim or final results of calculations in the memory unit 302.

Further, the control device 300 is equipped with devices 311, 312, 313, 314 for receiving and sending of input and output signals. These input and output signals may contain wave shapes, pulses, or other attributes, which may be detected as information by the devices 311, 313 for the receipt of input signals, and may be converted into signals that may be processed by the calculation unit 301. These signals are then provided to the calculation unit 301. The devices 312, 314 for sending output signals are arranged to convert the calculation result from the calculation device 301 into output signals for transfer to other parts of the vehicle's control system and/or the component(s) for which the signals are intended, for example to the engine.

Each one of the connections to the devices for receiving and sending of input and output signals may consist of one or several of a cable; a data bus, such as a CAN (Controller Area Network) bus, a MOST (Media Oriented Systems Transport) bus, or any other bus configuration; or of a wireless connection.

A person skilled in the art will realise that the above-mentioned computer may consist of the calculation unit 301, and that the above-mentioned memory may consist of the memory unit 302.

Generally, control systems in modern vehicles consist of a communications bus system, consisting of one or several communications buses to connect a number of electronic control devices (ECUs), or controllers, and different components localised on the vehicle. Such a control system may comprise a large number of control devices, and the responsibility for a specific function may be distributed among more than one control device. Vehicles of the type shown thus often comprise significantly more control devices than shown in Figures 1 and 3, as is well known to a person skilled in the art within the technology area.

The present invention, in the embodiment shown, is implemented in the control device 300. The invention may, however, also be implemented wholly or partly in one or several other control devices, already existing in the vehicle, or in a control device dedicated to the present invention.

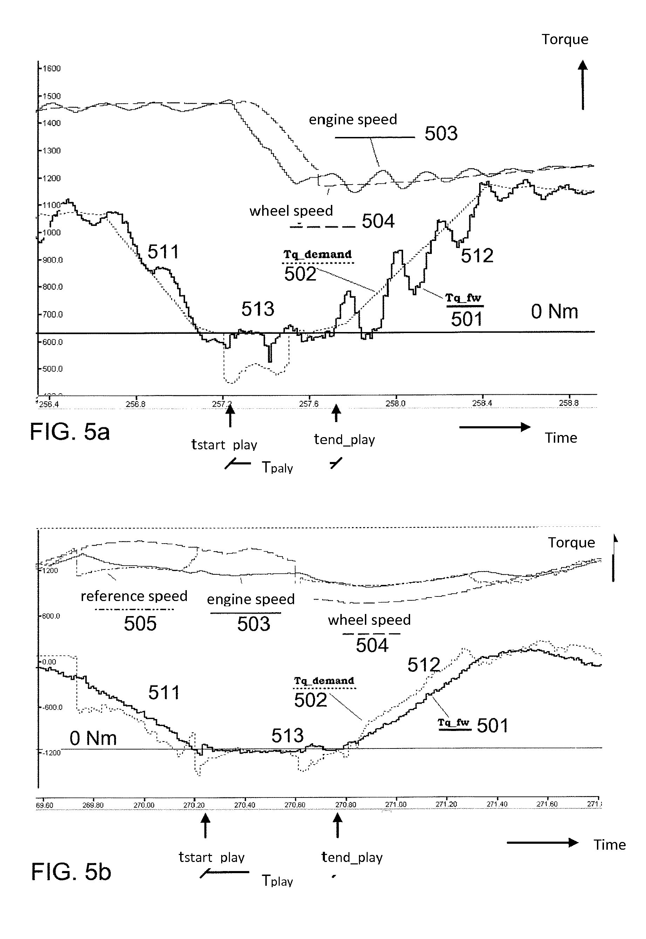

Figure 5a shows a prior art control, wherein a static torque request is made for a driving mode, which may for example correspond to/comprise a shift operation in the vehicle. Here, the dynamic torque $Tq_{fw}$ 501 (solid line) thus has to be reduced 511 to the play 513 at the speed 0 Nm, wherein, for example, a shift operation may take place, in order to later be increased 512 again. When the powertrain is in the time period $T_{glapp}$ during which the play in the powertrain prevails, the engine does not provide a dynamic torque $Tq_{fw}$ to the driving wheels. There are a number of possible plays that may occur in a powertrain, for example when cogwheels in gears, UV joints or similar do not properly engage at certain reciprocal angles. As mentioned above, a play may occur, for example, at a transition between dragging of the engine and acceleration/torque request, when engaging the clutch or during a shift operation. The position of the cog wheels in relation to each other during and outside of the play is schematically illustrated in the Figures 6a-c. The cogs in the cog wheels make contact in a first shaft position, during rotation in a first direction, as illustrated in Figure 6a, in a position corresponding to a maximum backward turn. The cogs in the cog wheels make contact in a second shaft position, during rotation in a second direction, as illustrated in Figure 6c, in a position corresponding to a maximum forward turn. Therefore, the cogs are engaged in both these positions (Figures 6a and 6c respectively), which also means that the play is rotated backwards and forwards respectively. The play for the powertrain is made up of the angle between the first and second shaft position, wherein the cogs are not engaged, i.e. in a position corresponding to a turning in the play, illustrated in Figure 6b, between the times $t_{start\_glapp}$ and $t_{slut\_glapp}$. Therefore, no torque is transferred during the play.

One way to determine the size of the play angle $\theta_{glapp}$ is by means of physically turning a shaft in the powertrain, for example the gearbox input shaft 109 or the gearbox output shaft 107. If the input shaft 109 is turned, the play of the entire powertrain is included, that is including plays in all gears such as the gearbox, the final gear 108 and any other gears in the powertrain. If instead the output shaft 107 is turned, then only plays after the gearbox are included, i.e. the play in the final gear is included, but the play in the gearbox is excluded. Therefore, turning the gearbox input shaft 109 provides a more comprehensive idea of the play. However, it may here be noted that the play of the final gear often dominates the play in the powertrain, and is also geared to the engine with the gear position in the gearbox, which is why turning the output shaft 107 in some cases provides a sufficient accuracy when determining the play angle.

When turning, the point at which the cogs engage ("max backwards" or "max forwards") and release each other ("in the play"), respectively, is registered, which provides the first and the second gear position at the start and the end of the play, respectively. This turning and registration of the size $\theta_{glapp}$ of the play angle may advantageously be carried out for the different gear positions in the gearbox. The determining of the size $\theta_{glapp}$ of the play angle may, for example, be performed in connection with the assembly of the vehicle, i.e. before it is commissioned, but may also be done after it has been commissioned.

Once the size $\theta_{glapp}$ of the play angle has been determined, for example for each of the gears in the gearbox, the size $\theta_{glapp}$ of the play angle may be stored in a memory, for example in control device 120 in the vehicle.

According to one embodiment of the present invention, the size $\theta_{glapp}$ of the play angle is determined by means of calculations based on one or more rotational speed differences $\Delta\omega$ during one or more plays, whereat the size $\theta_{glapp}$ of the play angle may be calculated as an integration, or a corresponding sum, of the rotational speed difference $\Delta\omega$ across the play; $\theta_{glapp} = \int_{t_{start\_glapp}}^{t_{slut\_glapp}} \Delta\omega$. This size $\theta_{glapp}$ may here, for example, be calculated several times for one or more plays, whereafter an averaging, or similar, of the calculated values provides a final value for the magnitude of $\theta_{glapp}$.

In Figures 5a-b, the engine speed is shown on the left $\gamma$-axis. The torque graph has an increasing value upwards, which is indicated by the arrow on the right side of the figure. The torque 0 Nm (the play) is marked by the horizontal line in the figure. Time is shown on the x-axis.

The graph 501 shows the dynamic torque $Tq_{fw}$ that is the result of the control. The graph 502 (dotted line graph) shows the requested torque $Tq_{demand}$. The graph 503 (line graph) shows the rotational speed $\omega e$ of the engine. The graph 504 (dash) shows the rotational speed $\omega_{wheel}$ of the wheels. The dynamic torque $Tq_{fw}$ is here to be ramped down to 0 Nm with a determined derivative. Then, the synchronisation of the engine speed and the shift operation itself take place. The requested torque $Tq_{demand}$ is then ramped up to a relatively high level again, for example to a value determined by the driver or the cruise control. It is evident from the figure that the resulting dynamic torque $Tq_{fw}$ 501 does not correspond with the requested torque's $Tq_{demand}$ even and non-oscillating graph 502. Instead the dynamic torque $Tq_{fw}$ 501 oscillates heavily, in particular during the ramping up 512, but also during the ramping down 511, which will be experienced as very uncomfortable for the driver and/or the passengers of the vehicle.

Figure 5b shows a control according to an embodiment of the present invention, wherein a dynamic torque request is implemented for a driving mode, which may for example comprise a shift operation in the vehicle, corresponding to the one illustrated in Figure 5a. Here, the dynamic torque $Tq_{fw}$ 501 (line graph) is to be reduced 511 to the play 513 at the speed 0 Nm, where, for example, a shift operation may take place, in order later to be increased 512 again. The graph 501 shows the dynamic torque $Tq_{fw}$, which is the result of the control. The graph 502 (dotted line graph) shows the requested torque $Tq_{demand}$. The graph 503 (line graph) shows the rotational speed $\omega_e$ of the engine. The graph 504 (dash) shows the rotational speed $\omega_{wheel}$ of the wheels. As is evident from the figure, a difference between a reference rotational speed $\omega_{ref}$ and the rotational speed $\omega_e$ of the engine may be used in the control according to the different embodiments described above, providing a control meaning that the engine speed $\omega_e$ relatively quickly may approach the reference rotational speed $\omega_{ref}$ 505 (dot dash line), for example once the ramping down has commenced at the time approx. 269.8 seconds.

It is also evident in the figure that the control may add a relatively significant torque change, such as a torque peak/dip shown at the time approx. 269.7 seconds, in order to achieve that the difference $\Delta\omega$ in rotational speed, which constitutes a difference between the rotational speed $\omega_{wheel}$ of the wheels 110, 111 and the rotational speed $\omega_e$ of the engine/shaft, is minimised. In the figure, the rotational speed $\omega_{wheel}$ of the wheels 110, 111 and the rotational speed of $\omega_e$ the engine/shaft are substantially of the same size.

Therefore, according to the present invention, the control may be used to reduce the rotational speed difference $\Delta\omega_{pres}$, i.e. the difference between the graph 503 for the rotational speed $\omega_e$ of the engine and the graph 504 for the rotational speed $\omega_{wheel}$ of the wheels, except when the dynamic torque $Tq_{fw}$ is at, or adjoining, the play 513 at the speed 0. In other words, the control according to the present invention may be used for the normal control, as well as prior to 511 and after 512 the play 513, in order to minimise the speed difference $\Delta\omega_{pres}$.

According to the present invention, the requested torque $Tq_{demand}$ is also allowed to vary considerably more than in the static torque request as per prior art and as illustrated in Figure 5a.

This means that the requested torque $Tq_{demand}$ has a somewhat jagged and uneven profile in Figure 5b. This is permitted according to the present invention, as the focus of the control is on providing the dynamic torque $Tq_{fw}$ 501 with an even and non-oscillating form. As is evident from Figure 5b, the result of the control also is that the dynamic torque $Tq_{fw}$ 501 oscillates considerably less, i.e. that is has considerably less amplitude, than the dynamic torque $Tq_{fw}$ 501 as per prior art control in Figure 5a. In particular, these differences in control are evident from the ramping up 512, which under prior art provides a severe, i.e. with great amplitude, oscillating dynamic torque $Tq_{fw}$ 501, whilst the oscillating dynamic torque $Tq_{fw}$ 501 according to the present invention in Figure 5b achieves a substantially non-oscillating profile. Therefore, greater comfort and better performance is achieved through the use of the present invention.

In this document, devices are often described as being arranged to carry out steps in the method according to the invention. This also comprises that the devices are adapted and/or set up to carry out these method steps.

The present invention is not limited to the embodiments of the invention described above, but relates to and comprises all embodiments within the protected scope of the enclosed independent claims.

**Claims**

1. System in a vehicle (100) for the control of a torque $Tq_{demand}$ requested from an engine (101), wherein said engine (101) provides a dynamic torque $Tq_{fw}$ to its output shaft (102) in response to said requested torque $Tq_{demand}$, wherein said dynamic torque $Tq_{fw}$ via a gear ratio $i$ is related to a dynamic wheel torque $Tq_{wheel}$, which is provided to at least one driving wheel (110, 111) in said vehicle (100) by a powertrain comprising said engine (101), **characterised by**

   - an execution device (126), arranged to perform a control of said requested torque $Tq_{demand}$, based on at least:
   - a current value $Tq_{fw-Pres}$ for said dynamic torque;
   - a moment of inertia $J$ for said powertrain;

   - a desired derivative $Tq_{fw\_req}$ for said dynamic torque related to a spring constant $k$ for said powertrain; $\dfrac{\dot{T}q_{fw\_req}}{k}$;

   - a current rotational speed difference $\Delta\omega_{pres}$ between a first end of a powertrain in said vehicle (100), rotating at a first rotational speed $\omega_1$, and a second end of said powertrain, rotating at a second rotational speed $\omega_2$; and
   - a calibration parameter $\tau_{cal}$, which is related to a transient for said dynamic torque in the direction of the desired derivative $\dot{T}q_{fw-req}$; wherein
   - said execution device (126) is arranged to, at least in part, be able to continuously control said first engine

speed $\omega_1$ in the direction of said second engine speed $\omega_2$.

2. System according to claim 1, wherein said execution device (126) is arranged to determine whether said first rotational speed $\omega_1$ corresponds to an engine speed $\omega_e$ for said engine (101), and said second rotational speed $\omega_2$ corresponds to a geared rotational speed $\omega_{wheel}$ for at least one driving wheel, said requested torque $Tq_{demand}$ at least being based on a sum of said current value $Tq_{fw\_pres}$ for said dynamic torque and a term comprising said moment of inertia $J$, multiplied by a ratio between a difference between a reference rotational speed $\omega_{ref}$ and said engine speed $\omega_e$ for said engine, divided by said calibration parameter

$\tau_{cal}$; $Tq_{demand} = Tq_{fw\_pres} + J\left(\frac{\omega_{ref} - \omega_e}{\tau_{cal}}\right)$; wherein said execution device is arranged to determine said reference rotational speed $\omega_{ref}$, based on a sum of said rotational speed $\omega_{wheel}$ for at least one driving wheel, and a ratio between said desired derivative $\dot{T}q_{fw\_req}$ and said spring constant $k$; $\omega_{ref} = \omega_{wheel} + \dfrac{\dot{T}q_{fw\_req}}{k}$.

3. Method according to any of claims 1-2, wherein said execution device (126) is arranged to determine whether said first rotational speed $\omega_1$ corresponds to an engine speed $\omega_e$ for said engine (101), and said second rotational speed $\omega_2$ corresponds to a geared rotational speed $\omega_{wheel}$ for at least one driving wheel, said engine torque $Tq_{demand}$ as a sum of said current value $Tq_{fw\_pres}$ for said dynamic torque, a total delay time $t_{delay\_total}$, multiplied by the desired said derivative $\dot{T}q_{fwr\_req}$, a moment of inertia $J$ for said powertrain, multiplied by an acceleration $i$ geared with said ratio for said at least one driving wheel (110, 111) $\omega_{wheel}$, and a term comprising said moment of inertia $J$, multiplied by a ratio between a difference between a reference rotational speed $\omega_{ref}$ and said engine speed $\omega_e$ for said engine, divided by said calibration parameter $\tau_{cal}$,

$Tq_{demand} = Tq_{fw\_pres} + t_{delay\_total}\dot{T}q_{fw\_req} + J\dot{\omega}_{wheel} + J\left(\frac{\omega_{ref} - \omega_e}{\tau_{cal}}\right)$; wherein said reference rotational speed $\omega_{ref}$ is determined, based on the sum of said rotational speed $\omega_{wheel}$ for at least one driving wheel and a ratio between said desired derivative $\dot{T}_{qfw\_req}$ and said spring constant $k$; $\omega_{ref} = \omega_{wheel} + \dfrac{\dot{T}q_{fw\_req}}{k}$.

4. System according to claim 3, wherein the total delay time $t_{delay\_total}$ corresponds to the time elapsing from the determining of at least one parameter value until a change in said dynamic torque $Tq_{fw}$, based on the determined at least one parameter value, has been performed.

5. System according to claim 4, wherein said execution device (126) is arranged to determine said parameter value, based on at least one measurement and/or at least one estimate of said parameter value.

6. System according to any of claims 3-5, wherein said total delay time $t_{delay\_total}$ comprises one or several from among the group:

   - a measuring time $t_{measure}$ elapsing to determine said at least one parameter value based on at least one measurement;
   - an estimation time $t_{estimate}$ elapsing in order to determine at least one parameter value, based on at least one estimation;
   - a communication time $t_{com}$ elapsing in order to transfer signals that are used in said control between devices in said vehicle (100);
   - a filtering time $t_{filter}$, which comprises filter delays;
   - a calculation time $t_{comp}$ elapsing in order to perform calculations related to said control; and
   - a torque execution time $t_{torque\_response}$ elapsing from the request for a torque until an engine speed change corresponding to said torque request occurs.

7. System according to any of claims 1-6, wherein said execution device (126) is arranged to determine said control of said requested torque $Tq_{demand}$, based also on a feedback of a resulting actual value $\dot{T}q_{fw\_actual}$ corresponding to the desired derivative $\dot{T}q_{fw\_req}$.

8. Method according to any of claims 1-7, wherein the desired derivative $\dot{T}q_{fw\text{-}req}$ for said dynamic torque is related to one or more of the group:

- a driving mode for said vehicle (100), and
- a calibration of at least one parameter related to a risk for jerkiness in a powertrain in said vehicle (100);
- a ramping down prior to a shift operation in a gearbox (103) in said vehicle (100);
- a ramping up prior to a shift operation in a gearbox (103) in said vehicle (100);
- a ramping down prior to the releasing of a clutch (406) in said vehicle (100);
- a ramping up after a shift operation in a gearbox (103) in said vehicle (100);
- a ramping down after a shift operation in a gearbox (103) in said vehicle (100); and
- a ramping up after engaging a clutch (406) in said vehicle (100).

9. Method according to claim 1-8, wherein said first rotational speed $\omega_1$ corresponds to an engine speed $\omega_e$ for said engine (101); $\omega_1 = \omega_e$.

10. System according to any of claims 1-9, wherein said second rotational speed $\omega_2$ corresponds to a geared rotational speed $\omega_{wheel}$ for at least one driving wheel in said vehicle (100); $\omega_2 = \omega_{wheel}$.

11. System according to any of claims 1-10, wherein said spring constant $k$ is one of the group of:

- a spring constant $k_{drivaxel}$ for driving shafts (104, 105) in said vehicle (100), which dominates said spring constant $k$ for said powertrain; and
- a total spring constant $k_{tot}$ for said powertrain.

12. System according to any of claims 1-11, wherein said spring constant $k$ is determined by means of one or several of the group:

- calculations based on a configuration for said vehicle (100); and
- adaptive estimations during the operating of the vehicle (100).

13. System according to any of claims 1-12, wherein said control results in a minimising of said rotational speed differences $\Delta\omega_{pres}$.

14. Method in a vehicle (100) for the control of a torque $Tq_{demand}$ requested from an engine (101), wherein said engine (101) provides a dynamic torque $Tq_{fw}$ to its output shaft (102) in response to said requested torque $Tq_{demand}$, wherein said dynamic torque $Tq_{fw}$ is related through a gear ratio $i$ to a dynamic wheel torque $Tq_{wheel}$, which is provided to at least one driving wheel (110, 111) in said vehicle (100) by a powertrain comprising said engine (101), **characterised by** that a control of said requested torque $Tq_{demand}$ is performed, at least based on:

- a current value $Tq_{fw-Pres}$ for said dynamic torque;
- a moment of inertia $J$ for said powertrain;
- a desired derivative $\dot{Tq}_{fw\_req}$ for said dynamic torque related to a spring constant $k$ for said powertrain;

$$\frac{\dot{Tq}_{fw\_req}}{k};$$

- a current rotational speed difference $\Delta\omega_{pres}$ between a first end of a powertrain in said vehicle (100), rotating at a first rotational speed $\omega_1$, and a second end of said powertrain, rotating at a second rotational speed $\omega_2$; and
- a calibration parameter $\tau_{cal}$, which is related to a transient for said dynamic torque in the direction of the desired derivative $\dot{Tq}_{fw\_req}$; wherein
- said first rotational speed $\omega_1$, at least in part, is continuously controlled in the direction of said second rotational speed $\omega_2$.

15. Method according to claim 14, wherein, if said first rotational speed $\omega_1$ corresponds to an engine speed $\omega_e$ for said engine (101), and said second rotational speed $\omega_2$ corresponds to a geared rotational speed $\omega_{wheel}$ for at least one driving wheel, said requested torque $Tq_{demand}$ is determined, based at least on a sum of said current value $Tq_{fw-Pres}$ for said dynamic torque and a term comprising said moment of inertia $J$, multiplied by a ratio between a difference between a reference rotational speed $\omega_{ref}$ and said engine speed $\omega_e$ for said engine, divided by said calibration

parameter $\tau_{cal}$; $Tq_{demand} = Tq_{fw\_pres} + J\left(\frac{\omega_{ref}-\omega_e}{\tau_{cal}}\right)$; wherein said reference rotational speed $\omega_{ref}$ is determined based on a sum of said rotational speed $\omega_{wheel}$ for at least one driving wheel and a ratio between said desired derivative $\dot{T}_{qfw\_req}$ and said spring constant $k$; $\omega_{ref} = \omega_{wheel} + \frac{\dot{T}q_{fw\_req}}{k}$.

16. Method according to any of claims 14-15, wherein, if said first rotational speed $\omega_1$ corresponds to an engine speed $\omega_e$ for said engine (101), and said second rotational speed $\omega_2$ corresponds to a geared rotational speed $\omega_{wheel}$ for at least one driving wheel, said engine speed $Tq_{demand}$ is determined as a sum of a said current value $Tq_{fw\_pres}$ for said dynamic torque, a total delay time $t_{delay\_total}$, multiplied by the desired said derivative $\dot{T}q_{fw\_req}$, a moment of inertia $J$ for said powertrain, multiplied by an acceleration $\dot{\omega}_{wheel}$ geared with said ratio $i$ for said at least one driving wheel (110, 111) and a term comprising said moment of inertia $J$ multiplied by a ratio between a difference between a reference rotational speed $\omega_{ref}$ and said engine speed $\omega_e$ for said engine, divided by said calibration parameter $\tau_{cal}$; $Tq_{demand} = Tq_{fw\_pres} + t_{delay\_total}\dot{T}q_{fw\_req} + J\dot{\omega}_{wheel} + J\left(\frac{\omega_{ref}-\omega_e}{\tau_{cal}}\right)$; wherein said reference rotational speed $\omega_{ref}$ is determined, based on the sum of said rotational speed $\omega_{wheel}$ for at least one driving wheel and a ratio between said desired derivative $\dot{T}_{qfw\_req}$ and said spring constant $k$; $\omega_{ref} = \omega_{wheel} + \frac{\dot{T}q_{fw\_req}}{k}$.

17. Method according to claim 16, wherein said total delay time $t_{delay\_total}$ corresponds to the time elapsing from a determining of at least one parameter value until a change in the dynamic torque $Tq_{fw}$, based on the determined at least one parameter value, has been performed.

18. Method according to claim 17, wherein said determining of said parameter value comprises at least one measurement and/or at least one estimation of said parameter value.

19. Method according to any of claims 16-18, wherein said delay time $t_{delay\_total}$ comprises one or more of the group:

    - a measuring time $t_{measure}$ elapsing in order to determine said at least one parameter value based on at least one measurement;
    - an estimation time $t_{estimate}$ elapsing in order to determine at least one parameter value based on at least one estimation;
    - a communication time $t_{com}$ elapsing in order to transfer signals that are used in said control between devices in said vehicles (100) ;
    - a filtering time $t_{filter}$, which comprises filter delays;
    - a calculation time $t_{comp}$ elapsing in order to perform calculations related to said control; and
    - a torque execution time $t_{torque\_response}$ elapsing from the request for a torque until an engine speed change corresponding to said torque request occurs.

20. Method according to any of claims 14-20, wherein said control of said requested torque $Tq_{demand}$ is also based on a feedback of a resulting actual value $\dot{T}q_{fw\_actual}$, corresponding to said desired derivative $\dot{T}q_{fw\_req}$.

21. Method according to any of claims 14-20, wherein the desired derivative $\dot{T}q_{fw\_req}$ for said dynamic torque is related to one or more of the group:

    - a driving mode for said vehicle (100) ; and
    - a calibration of at least one parameter related to a risk for jerkiness in a powertrain in said vehicle (100);
    - a ramping down prior to a shift operation in a gearbox (103) in said vehicle (100);
    - a ramping up prior to a shift operation in a gearbox (103) in said vehicle (100);
    - a ramping down prior to the releasing of a clutch (406) in said vehicle (100);
    - a ramping up after a shift operation in a gearbox (103) in said vehicle (100);
    - a ramping down after a shift operation in a gearbox (103) in said vehicle (100); and
    - a ramping up after engaging a clutch (406) in said vehicle (100).

**22.** Method according to any of claims 14-21, wherein said first rotational speed $\omega_1$ corresponds to an engine speed $\omega_e$ for said engine (101); $\omega_1 = \omega_e$.

**23.** Method according to any of claims 14-22, wherein said second rotational speed $\omega_2$ corresponds to a geared rotational speed $\omega_{wheel}$ for at least one driving wheel in said vehicle (100; $\omega_2 = \omega_{wheel}$.

**24.** Method according to any of claims 14-23, wherein said spring constant $k$ is one of the group of:

- a spring constant $k_{drivaxel}$ for driving shafts (104, 105) in said vehicle (100), which dominates said spring constant $k$ for said powertrain; and
- a total spring constant $k_{tot}$ for said powertrain.

**25.** Method according to any of claims 14-24, wherein said spring constant $k$ is determined by means of one or several of the group:

- calculations based on a configuration for said vehicle (100); and
- adaptive estimations during the operating of the vehicle (100).

**26.** Method according to any of claims 14-25, wherein said control results in a minimising of said rotational speed differences $\Delta\omega_{pres}$.

**27.** Computer program comprising a program code which, when said program code is executed in a computer, achieves that said computer executes the method according to any of claims 14-26.

**28.** Computer program product comprising a computer readable medium and a computer program according to claim 27, said computer program being comprised in said computer readable medium.

FIG. 1

[201]

Determine $Tq_{fw\_pres}$

[202]

Determine $J$

[203]

Determine the derivative of $Tq_{fw\_req}$ and divide by $k$

[204]

Determine $\Delta\omega_{pres}$

[205]

Determine $\tau_{cal}$

[206]

Control at least based on:

- $Tq_{fw\_pres}$

- $J$

- the derivative for $Tq_{fw\_req}$ divided by $k$

- $\Delta\omega_{pres}$

- $\tau_{cal}$

Fig. 2

Fig. 3

Fig. 6a

Fig. 6b

Fig. 6c

| Pedal |
| Cruise control |
| Shift system - |
| Other torque request |

| Conversion: torque -> fuel |
| Fuel injection |

## FIG. 4a

| Pedal |
| Cruise control |
| Shift system |
| Other torque request |

| Control system according to the invention |
| Conversion: torque -> fuel |
| Fuel injection |

## FIG. 4b

Torque ↑

-1600

-1500

-1400    engine speed        503

-1300

-1200

-1100    wheel speed       504

-1000

-900.0    511

-800.0    Tq_demand        512
           502

-700.0    513                Tq_fw        0 Nm
                              501

-600.0

-500.0

256.4    256.8    257.2    257.6    258.0    258.4    258.8

**FIG. 5a**                                    Time →

tstart_play        tend_play
⌐— Tpaly        ⌐

Torque

-1200    reference speed   engine speed

-600.0    505              503        wheel speed
                                       504

-0.00                              512

-600.0    511              Tq_demand
                           502

          0 Nm             513        Tq_fw  501

-1200

69.60  269.80  270.00  270.20  270.40  270.80  270.80  271.00  271.20  271.40  271.60  271.

**FIG. 5b**                                    Time →

tstart_play        tend_play
⌐— Tplay

**EUROPEAN SEARCH REPORT**

Application Number

EP 15 16 9068

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/003544 A2 (VOLVO LASTVAGNAR AB [SE]; TEMPLIN PETER [SE]) 13 January 2011 (2011-01-13) * page 4, line 17 - page 15, line 17 * * claims 1-9 * * figures 3-10 * | 1-28 | INV. F02D41/10 F02D41/14 F02D41/30 |
| X | BERRIRI M ET AL: "Active damping of automotive powertrain oscillations by a partial torque compensator", CONTROL ENGINEERING PRACTICE, PERGAMON PRESS, OXFORD, GB, vol. 16, no. 7, 1 July 2008 (2008-07-01), pages 874-883, XP022681084, ISSN: 0967-0661, DOI: 10.1016/J.CONENGPRAC.2007.10.010 [retrieved on 2007-12-03] | 1,14,27 | |
| A | * page 875, column 2, paragraph 2 - page 879, column 1, paragraph 5 * * figures 1-6 * | 2-13, 15-26,28 | |
| A | EP 2 019 194 A1 (MAGNETI MARELLI POWERTRAIN SPA [IT]) 28 January 2009 (2009-01-28) * paragraphs [0008] - [0017] * * paragraphs [0020] - [0026] * * claims 1-4 * * figure 3 * | 1-28 | TECHNICAL FIELDS SEARCHED (IPC) F02D |
| A | WO 2012/115582 A1 (SCANIA CV AB [SE]; LEREDE NICLAS [SE]; FLEMMER HENRIK [SE]) 30 August 2012 (2012-08-30) * page 3, line 2 - page 4, line 10 * * page 5, line 20 - page 17, line 22 * * figures 1-4 * | 1-28 | |

The present search report has been drawn up for all claims

| Place of search | Date of completion of the search | Examiner |
|---|---|---|
| Munich | 26 October 2015 | Calabrese, Nunziante |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**                      EP 15 16 9068

This annex lists the patent family members relating to the patent documents cited in the above-mentioned European search report.
The members are as contained in the European Patent Office EDP file on
The European Patent Office is in no way liable for these particulars which are merely given for the purpose of information.

26-10-2015

| Patent document cited in search report | | Publication date | Patent family member(s) | | Publication date |
|---|---|---|---|---|---|
| WO 2011003544 | A2 | 13-01-2011 | EP | 2451686 A2 | 16-05-2012 |
| | | | ES | 2421284 T3 | 30-08-2013 |
| | | | US | 2012101705 A1 | 26-04-2012 |
| | | | WO | 2011003544 A2 | 13-01-2011 |
| EP 2019194 | A1 | 28-01-2009 | AT | 473363 T | 15-07-2010 |
| | | | BR | PI0802440 A2 | 07-04-2009 |
| | | | CN | 101396977 A | 01-04-2009 |
| | | | EP | 2019194 A1 | 28-01-2009 |
| | | | US | 2009093937 A1 | 09-04-2009 |
| WO 2012115582 | A1 | 30-08-2012 | CN | 103402846 A | 20-11-2013 |
| | | | EP | 2678205 A1 | 01-01-2014 |
| | | | JP | 2014508677 A | 10-04-2014 |
| | | | KR | 20130122694 A | 07-11-2013 |
| | | | RU | 2013142911 A | 27-03-2015 |
| | | | SE | 1150148 A1 | 24-08-2012 |
| | | | US | 2013304350 A1 | 14-11-2013 |
| | | | WO | 2012115582 A1 | 30-08-2012 |

EPO FORM P0459

For more details about this annex : see Official Journal of the European Patent Office, No. 12/82